# EUROPÄISCHE PATENTANMELDUNG

(11) **EP 1 580 069 A2**
(43) Veröffentlichungstag der Anmeldung: **28.09.2005**
(21) Anmeldenummer: 05006655.4
(22) Anmeldetag: 24.03.2005
(51) Int. Cl.: B60N 3/04

(54) **Bodenmatte**

(30) Priorität: 25.03.2004 DE 202004004713 U
(71) Anmelder: FER Fahrzeugelektrik GmbH, 99819 Eisenach (DE)
(72) Erfinder: Moser, Helmut, 76646 Bruchsal (DE)
(74) Vertreter: Strasser, Wolfgang

(57) **Zusammenfassung**

Die Erfindung betrifft eine Bodenmatte (1) für den Innenraum von Fahrzeugen, insbesondere Kraftfahrzeugen. Die Beleuchtung des Fahrzeuginnenraumes und insbesondere des Fußraumes kann wesentlich verbessert werden, wenn in der Bodenmatte (1) eine Elektrolumineszenz-Leuchtanordnung (3) integriert ist.

## Beschreibung

Die Erfindung betrifft eine Bodenmatte für Fahrzeuge, insbesondere Kraftfahrzeuge der im Oberbegriff von Anspruch 1 genannten Art.

Fest eingebaute oder lose eingelegte Bodenmatten für den Fußraum von Fahrzeugen, insbesondere von Personenkraftwagen sind allgemein bekannt.

Um das Einsteigen in einen Personenkraftwagen bei Nacht zu erleichtern, ist es bekannt, in den Türschwellern Funktionsleuchten vorzusehen, die beim Öffnen der zugehörigen Tür automatisch eingeschaltet werden. Dies hat aber den Nachteil, dass dann, wenn die betreffende Tür nach dem Einsteigen wieder geschlossen wird, die Funktionsleuchte von der Tür weitgehend oder sogar vollständig überdeckt wird und daher für eine zumindest zeitweise aufrecht zu erhaltende Beleuchtung des Fahrzeuginnenraumes nicht genutzt werden kann.

Demgegenüber liegt der Erfindung die Aufgabe zugrunde, für eine Beleuchtung im Bodenbereich von Fahrzeugen, insbesondere Kraftfahrzeugen zu sorgen, die nicht nur das Einsteigen bei Nacht erleichtert, sondern auch im Fahrzeuginnern als Ambientelicht und/oder als Werbeträger dienen kann.

Zur Lösung dieser Aufgabe sieht die Erfindung die im Anspruch 1 niedergelegten Merkmale vor.

Dadurch, dass in die Bodenmatte eines Fahrzeuges eine Elektrolumineszenz-Leuchtanordnung integriert ist, ist es möglich, den Bodenbereich des betreffenden Fahrzeuges praktisch an beliebigen Stellen zeitweise oder dauerhaft zu beleuchten. In dem Fall, dass die Elektrolumineszenz-Leuchtanordnung nur in der oben geschilderten Weise als Einstiegshilfe dienen soll, wird sie beim Öffnen der betreffenden Tür automatisch eingeschaltet und beispielsweise über eine Zeitgeberschaltung so gesteuert, dass sie nach dem Schließen der Tür für einen vorbestimmten Zeitraum leuchtet, um dann selbsttätig abgeschaltet zu werden.

Alternativ hierzu ist aber auch eine dauerhafte, über einen EIN/AUS-Schalter steuerbare Beleuchtung möglich.

Auch ist die erfindungsgemäße Bodenmatte nicht nur auf Personenkraftwagen beschränkt. Sie kann in gleicher Weise in Lastkraftwagen, Schiffen oder Flugzeugen zum Einsatz kommen.

Die Bodenmatte kann entweder fest mit dem Fahrzeug verbunden oder in den Bodenraum lose eingelegt sein. In jedem Fall weist sie einen Anschluß an das Bordnetz des betreffenden Fahrzeuges auf. Wird die Matte nur lose eingelegt, so kann dieser Anschluß beispielsweise über elektrisch leitende, einrastende Druckknopf-Kontakte oder elektrisch leitende Magnet-Haftkontakte hergestellt werden, die gleichzeitig ein Verrutschen der Bodenmatte verhindern.

Vorzugsweise ist die Elektrolumineszenz-Leuchtanordnung als Flachkondensator ausgebildet, der in einem flachen Gehäuse untergebracht ist, das in eine entsprechende Ausnehmung der Bodenmatte eingesetzt ist und dessen Dicke nur geringfügig größer oder gleich der der Bodenmatte ist.

Um die Berührungssicherheit der elektrischen Anschlüsse für den Flachkondensator zu wahren, ist im Gehäuse der Elektrolumineszenz-Leuchtanordnung vorzugsweise ein Inverter bzw. Zerhacker-Transformator vorgesehen, der die zugeführte Niedervolt-Bord-Gleichspannung in die für den Betrieb des Flachkondensators erforderliche höhere Wechselspannung umwandelt.

Die für den Einbau in die Bodenmatte vorgesehene Elektrolumineszenz-Leuchtanordnung kann mit der Bodenmatte als Erstausstattung in ein Fahrzeug eingebaut oder für eine Nachrüstung vorhandener Bodenmatten angeboten werden.

Die Montage bzw. der Einbau ist außerordentlich einfach, da lediglich ein entsprechend dimensionierter, von der einen zur anderen Flachseite durchgehender Ausschnitt in einer herkömmlichen Bodenmatte hergestellt werden muß, in den dann von der Unterseite der untere Teil des vorzugsweise zweiteiligen Gehäuses, der auch den Flachkondensator und die zugehörige elektronische Schaltung mit dem erwähnten Inverter aufnimmt, eingeschoben wird. Das Deckelelement wird dann von oben her so aufgesetzt, dass es beispielsweise durch eine Rastverbindung fest mit dem Bodenelement des Gehäuses verbunden wird. Der Elektrolumineszenz-Flachkondensator und die zugehörige Elektronik sind auf diese Weise in einem feuchtigkeitsdichten Hohlraum eingeschlossen, dessen hermetisch dichte Versiegelung durch eine zusätzliche, zwischen die beiden Gehäuseelemente eingefügte Dichtung verbessert werden kann. Diese und weitere vorteilhafte Ausgestaltungen einer erfindungsgemäßen Bodenmatte sind in den Unteransprüchen niedergelegt.

Die Erfindung wird im folgenden anhand eines Ausführungsbeispiels unter Bezugnahme auf die Zeichnung beschrieben; in dieser zeigen:
- Fig. 1: eine Draufsicht auf die Oberseite einer erfindungsgemäßen Bodenmatte mit eingebauter Elektrolumineszenz-Leuchtanordnung und
- Fig. 2: in vergrößertem Maßstab einen Schnitt durch die Bodenmatte aus Figur 1 längs der Linie II-II.

In den Figuren ist eine Bodenmatte 1 für den Innenraum von Fahrzeugen, insbesondere Kraftfahrzeugen dargestellt, in welche eine Elektrolumineszenz-Leuchtanordnung 3 integriert ist.

Die Elektrolumineszenz-Leuchtanordnung 3 weist ein zweiteiliges Gehäuse auf, das aus einem wannenförmigen Bodenelement 5 und einem auf dieses aufsteckbaren Deckelelement 7 besteht, die beide vorzugsweise aus Kunststoff hergestellt sind. Im zusammengefügten Zustand umschliessen das Bodenelement 5 und das Deckelelement 7 in wasserdichter Weise einen Innenhohlraum 9, in dem ein Elektrolumineszenz-Flachkondensator 11 angeordnet ist, der eine Basiselektrode 14, eine Isolationsschicht 15, eine Pigmentschicht 16 und eine transparente Deckelektrode 17 umfasst und so angeordnet ist, dass sich seine flache Oberseite in etwa parallel zu der vom Deckelelement 7 gebildeten oberen Gehäusewand 19 erstreckt, die in ihrem den Flachkondensator 11 überdeckenden Bereich ein transparentes Fenster 21 aufweist, so dass das vom Flachkondensator 11 im Betrieb abgegebene Licht nach oben austreten kann.

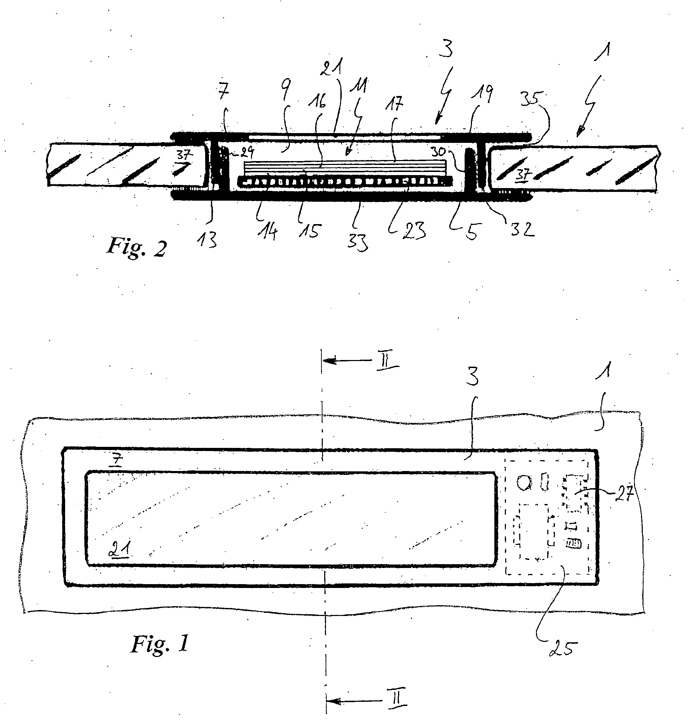

Es sei darauf hingewiesen, dass die Schichten 14 bis 17 des Flachkondensators 11 in Figur 2 der Deutlichkeit halber stark vergrößert und nicht in einem einheitlichen Maßstab dargestellt sind.

Als Träger für den Flachkondensator 11 dient eine gedruckte Schaltung 23, die vorzugsweise eine im wesentlichen steife Platine mit einer auf ihrer Oberseite vorgesehenen Metallbeschichtung umfasst, von der ein Teilbereich als Basiselektrode 14 des Flachkondensators 11 dient.

Auf der in Figur 1 rechten Seite des Gehäuses 5, 7 der Elektrolumineszenz-Leuchtanordnung 3 ist in einem Bereich, in welchem das Deckelelement 7 nicht transparent ist, in schematischer Weise eine elektronische Schaltungsanordnung 25 angedeutet, die im wesentlichen einen Inverter 27 umfasst, der in der Lage ist, aus einer über (nicht dargestellte) Anschlussleitungen zugeführten Bord-Gleichspannung, die beispielsweise von 12 V betragen kann, die für den Betrieb des Flachkondensators 11 erforderliche Wechselspannung im Bereich von 100 V bis 120 V und mit einer Frequenz im Bereich von 300 bis 600 Hz zu erzeugen.

Wie man insbesondere der Figur 2 entnimmt, verlaufen die Seitenwände 29, 30 des Bodenelementes 5 und die Seitenwände 31, 32 des Deckelelementes 7 zueinander parallel und in etwa senkrecht zu der oberen Gehäusewand 19 und der hierzu parallelen unteren Gehäusewand 33.

Gleiches gilt auch für die in der Schnittdarstellung der Figur 2 nicht sichtbaren Seitenwände, so dass der Innenhohlraum 9 eine im wesentlichen kubische Form besitzt. Der Innenabstand der einander jeweils gegenüberliegenden Seitenwände des Deckelelementes 7 ist gerade so viel größer als der Aussenabstand der zu ihnen parallelen Seitenwände des Bodenelementes 5, dass das Deckelelement 7 auf das Bodenelement 5 im engen Passsitz aufgedrückt werden kann. Gewünschtenfalls kann zur Verbesserung der Dichtigkeit ein zusätzliches, nicht dargestelltes Dichtelement, beispielsweise in Form einer Dichtlippe vorgesehen sein.

Die obere Gehäusewand 19 und die untere Gehäusewand 33 springen über die Seitenwände in horizontaler Richtung vor, so dass eine um den gesamten Umfang des Gehäuses 5, 6 umlaufende Nut 35 gebildet wird, in welche die Ränder 37 der Öffnung eingreifen, die in der Bodenmatte 1 zur Aufnahme der Elektrolumineszenz-Leuchtanordnung 3 vorgesehen ist. Wie man sieht, ist die Höhe des Gehäuses 5, 7 der Elektrolumineszenz-Leuchtanordnung 3 nur geringfügig größer als die Dicke der Bodenmatte 1, so dass deren insgesamt flache Form erhalten bleibt.

Die Gehäuseelemente 5, 7 sind aus einem trittfesten Material, insbesondere Kunststoff hergestellt, das ohne weiteres die Kräfte aufnehmen kann, die auf das Gehäuse 5, 6 ausgeübt werden, wenn sich eine Person mit ihrem vollem Körpergewicht auf dem Bereich der Bodenmatte 1 abstützt, in welchem sich die Elektrolumineszenz-Leuchtanordnung 3 befindet.

Bei dem in den Figuren dargestellten Ausführungsbeispiel ist die Elektrolumineszenz-Leuchtanordnung 3 und insbesondere ihr Fenster 21 in einer rechteckigen Form dargestellt. Es sei ausdrücklich darauf hingewiesen; dass auch beliebige andere eckige und abgerundete Formen vorgesehen werden können. Auch die Farbe des vom Elektrolumineszenz-Flachkondensator 11 abgegebenen Lichtes bzw. des Fensters 21 kann innerhalb weiter Grenzen variiert werden, so dass sich eine Vielzahl von Design-Gestaltungsmöglichkeiten ergibt.

## Patentansprüche

1. Bodenmatte (1) für den Innenraum von Fahrzeugen, insbesondere Kraftfahrzeugen, **dadurch gekennzeichnet, dass** die Bodenmatte (1) eine Elektrolumineszenz-Leuchtanordnung (3) umfasst.

2. Bodenmatte (1) nach Anspruch 1, **dadurch gekennzeichnet, dass** die Elektrolumineszenz-Leuchtanordnung (3) einen Flachkondensator (11) zumindest bestehend aus einer Basiselektrode (14), einer Pigmentschicht (16) und einer transparenten Deckelektrode (17) umfasst, die sich in etwa parallel zur oberen Flachseite der Bodenmatte (1) erstreckt.

3. Bodenmatte (1) nach Anspruch 2, **dadurch gekennzeichnet, dass** die Elektrolumineszenz-Leuchtanordnung (3) ein den Flachkondensator (11) aufnehmendes, flaches Gehäuse (5, 7) umfasst, mit einem über der transparenten Deckelektrode (17) liegende Fenster (21), das für das vom Flachkondensator (11) abgegebene Licht transparent ist.

4. Bodenmatte (1) nach einem der Ansprüche 1 bis 3, **dadurch gekennzeichnet, dass** die Elektrolumineszenz-Leuchtanordnung (3) einen Inverter (27) umfasst, der aus einer Bord-Gleichspannung des Fahrzeugs die für den Betrieb der Elektrolumineszenz-Leuchtanordnung (3) erforderliche Wechselspannung erzeugt.

5. Bodenmatte (1) nach den Ansprüchen 3 und 4, **dadurch gekennzeichnet, dass** der Inverter (27) in dem flachen Gehäuse der Elektrolumineszenz-Leuchtanordnung (3) untergebracht ist.

6. Bodenmatte (1) nach Anspruch 5, **dadurch gekennzeichnet, dass** die Basiselektrode (14) des Flachkondensators (11) von der metallischen Beschichtung einer gedruckten Schaltung (23) gebildet wird, wobei diese gedruckte Schaltung (23) gleichzeitig als Träger und zur Leitungsverbindung mit dem Inverter (27) sowie der den Inverter (27) ergänzenden Bauelemente dient.

7. Bodenmatte (1) nach einem der Ansprüche 3 bis 6, **dadurch gekennzeichnet, dass** das flache Gehäuse (5, 7) zweiteilig ausgebildet ist und ein wannenförmiges Basiselement (5) zur Aufnahme des Flachkondensators (11) sowie ein auf das Basiselement (5) aufsteckbares Deckelelement (7) umfasst, die im zusammengesteckten Zustand einen zur Aufnahme des Flachkondensators (11) und der zu seiner Ansteuerung vorgesehenen elektronischen Schaltung (25) dienenden Innenhohlraum feuchtigkeitsdicht umschließen.

8. Bodenmatte (1) nach einem der Ansprüche 3 bis 7, **dadurch gekennzeichnet, dass** das flache Gehäuse (5, 7) eine in seinem Seitenumfang umlaufende Nut (35) besitzt, in welche die Ränder (37) eines in der Bodenmatte (1) vorgesehenen, zur Aufnahme des flachen Gehäuses (5, 7) dienenden Ausschnitts eingreifen.

9. Bodenmatte (1) nach Anspruch 8, **dadurch gekennzeichnet, dass** die umlaufende Nut (35) von über die vertikalen Seitenwände (29, 39, 31, 32) überstehenden Randabschnitten des Basiselements (5) einerseits und des Deckelelements (7) andererseits gebildet wird.

10. Bodenmatte (1) nach einem der Ansprüche 5 bis 9, **dadurch gekennzeichnet, dass** die den Inverter (27) und die ihn ergänzenden Bauelemente umfassende elektronischen Schaltung (25) durch einen nicht transparenten Teil des Deckelelements (7) abgedeckt ist.

11. Bodenmatte (1) nach einem der Ansprüche 2 bis 10, **dadurch gekennzeichnet, dass** der Flachkondensator (11) zwischen der Basiselektrode (14) und der transparenten Deckelektrode (17) zusätzlich zur Pigmentschicht (16) auch eine Isolationsschicht (15) umfasst.

12. Für den Einbau in eine Bodenmatte (1) nach einem der vohergehenden Ansprüche vorgesehene Elektrolumineszenz-Leuchtanordnung (3).
